# EUROPÄISCHE PATENTSCHRIFT

(11) **EP 1 041 703 B1**
(45) Veröffentlichungstag und Bekanntmachung des Hinweises auf die Patenterteilung: **24.08.2005**
(21) Anmeldenummer: 99810281.8
(22) Anmeldetag: 01.04.1999
(51) Int. Cl.: H02K 15/085

(54) **Wickelvorrichtung**
Winding machine
Machine à bobiner

(43) Veröffentlichungstag der Anmeldung: 04.10.2000
(73) Patentinhaber: ATS Wickel- und Montagetechnik AG, 5436 Würenlos (CH)
(72) Erfinder: Kleinschrodt, Rudolf, 5436 Würenlos (CH)
(74) Vertreter: patentanwälte breiter + wiedmer ag

(56) Entgegenhaltungen:
- EP-A- 0 422 931
- US-A- 2 348 948
- US-A- 3 927 456
- US-A- 4 836 461

## Beschreibung

Die Erfindung betrifft eine Vorrichtung zum Wickeln von Draht zu Spulen in am Aussenumfang rotationssymmetrischer Körper von elektrischen Geräten angeordnete Axialnuten und Einlegen des Drahtes in Schlitze von auf einer Endplatte des Körpers auf einem Kreis angeordneten und in axialer Richtung von der Endplatte abragenden Anschlusselementen, wobei die Schlitze parallel zur Rotationsachse des Körpers stirnseitig in das Anschlusselement verlaufen, mit einem den Draht führenden Wickelarm und einer Verschalteinheit mit Verschaltachse.

Bei Statoren von sogenannten Aussenläufer-Elektronikmotoren sind die einzelnen Spulen in am Aussenumfang des Stators angeordnete Axialnuten gewikkelt. Die Statoren sind mit einer Endplatte bestückt, von der in axialer Richtung Anschlusselemente für Terminals bzw. Kontaktfahnen für die spätere elektrische Kontaktierung des Stators abragen. Die Anschlusselemente sind jeweils mit einem ersten Schlitz zum Einlegen des Drahtes und mit einem senkrecht dazu liegenden zweiten Schlitz zum Einsetzen der Anschlussfahne ausgestattet.

Bisher wurden die Statoren auf herkömmlichen Wickelmaschinen ohne Beachtung der Drahtanschlüsse fertig gewickelt. Das Einlegen der Drähte in die Schlitze der Anschlusselemente erfolgte vor dem Aufsetzen der Printplatte und vor dem Setzen der Kontaktfahnen von Hand.

Der Erfindung liegt deshalb die Aufgabe zugrunde, eine Wickelvorrichtung der eingangs genannten Art zu schaffen, mit der das Wickeln und Einlegen des Drahtes in die Schlitze von Anschlusselementen automatisch in einem einzigen Arbeitsgang durchgeführt werden kann.

Zur erfindungsgemässen Lösung der Aufgabe führt eine um die Verschaltachse drehbar gelagerte Leit- und Abdeckhülse mit einem konisch erweiterten, eine Leitfläche bildenden Leitsegment als Führungshilfe zum Einlegen des Drahtes in den Schlitz eines Anschlusselementes und eine parallel zur Verschaltachse in einer Achse verschiebbare, ein Anschlusselement übergreifbare Drahtsetzhülse zum Setzen des Drahtes am Schlitzgrund.

Der erfindungsgemässe Einsatz einer Leit- und Abdeckhülse ermöglicht auf einfache Weise das Einlegen des Drahtes in den Schlitz eines Anschlusselementes, vor allem am Anfang des Wickelvorganges. Um auch das Einlegen eines Drahtes für einen Zwischenanschluss innerhalb der Wicklung zu ermöglichen, ist eine vorteilhafte Weiterbildung der Erfindung gekennzeichnet durch ein in einer Achse verschiebbares und um diese Achse drehbar gelagertes Drahtumlenkmittel zur parallelen Ausrichtung des in den Schlitz eines Anschlusselementes einzulegenden Drahtes mit dem Schlitz. Dieses Drahtumlenkmittel umfasst zweckmässigerweise zwei in Abstand parallel zu einander angeordnete Stäbe.

Für ein sicheres Einlegen des Drahtes bei Verwendung einer Leit- und Abdeckhülse hat es sich als vorteilhaft herausgestellt, wenn vor dem Einlegen des Drahtes in den Schlitz mit einem von der Leitfläche des Leitsegments abragenden Stift eine Drahtschlaufe gebildet wird.

Weitere Vorteile und Einzelheiten der Erfindung ergeben sich aus der nachfolgenden Beschreibung bevorzugter Ausführungsbeispiele sowie anhand der Zeichnung; diese zeigt schematisch in
- - Fig. 1: die Draufsicht auf eine Anlage zum Wickeln von Statoren für Aussenläufer-Elektronikmotoren;
- - Fig. 2: eine teilweise geschnittene Seitenansicht einer Wickelvorrichtung von Fig. 1;
- - Fig. 3: eine teilweise geschnittene Seitenansicht eines Teils einer erfindungsgemässen Vorrichtung in einer ersten Betriebsposition;
- - Fig. 4: die Vorrichtung von Fig. 3 in einer zweiten Betriebsposition;
- - Fig. 5: eine Seitenansicht der Leit- und Abdeckhülse der Vorrichtung von Fig. 4;
- - Fig. 6: die Ansicht der Leit- und Abdeckhülse von Fig. 5 in Blickrichtung y;
- - Fig. 7a - c: die Draufsicht auf die Endplatte eines Stators mit Anschlusselementen in verschiedenen Stadien während der Drahteinführung;
- - Fig. 8: einen Querschnitt durch ein Anschlusselement mit eingesetzter Kontaktfahne;
- - Fig. 9: eine teilweise geschnittene Seitenansicht einer Palette;
- - Fig. 10: die Draufsicht auf die Palette von Fig. 10.

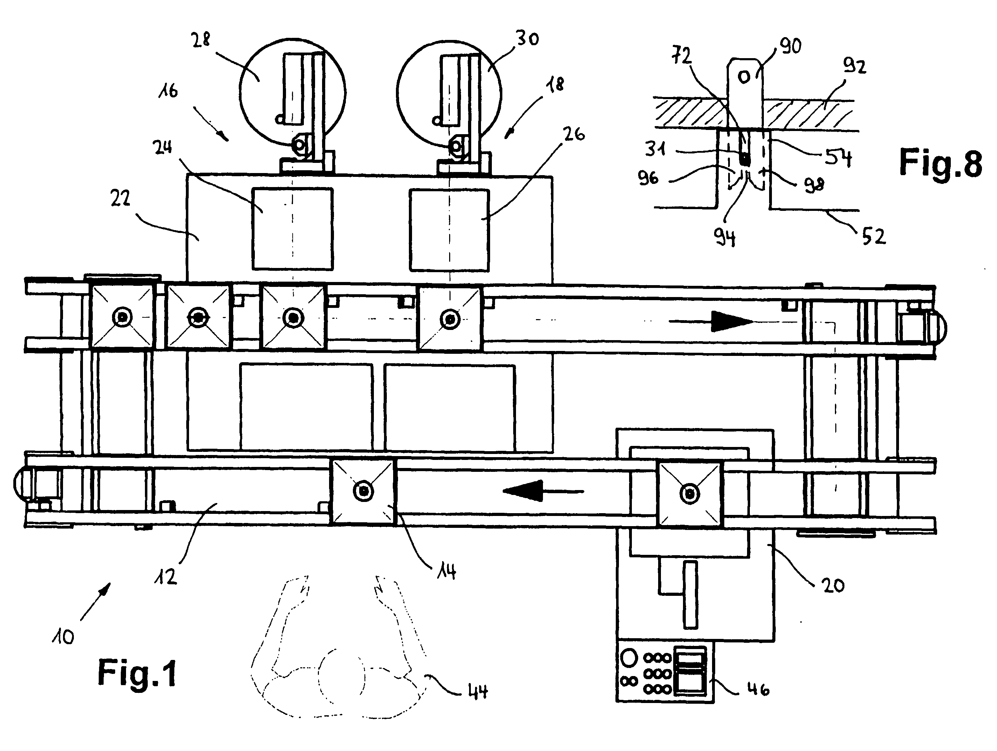

Eine in Fig. 1 gezeigte Anlage 10 zum Wickeln von Statoren für Aussenläufer-Elektronikmotoren weist ein Palettenfördersystem 12 für den Transport von Paletten 14 zu verschiedenen, entlang des Fördersystems angeordneten Bearbeitungsstationen auf. Bei der dargestellten Anlage 10 sind drei Bearbeitungsstationen vorhanden, nämlich zwei Wickelstationen 16, 18 und eine Terminalsetzstation 20. Selbstverständlich können auch mehr als zwei Wickelstationen sowie weitere Bearbeitungsstationen angeordnet sein.

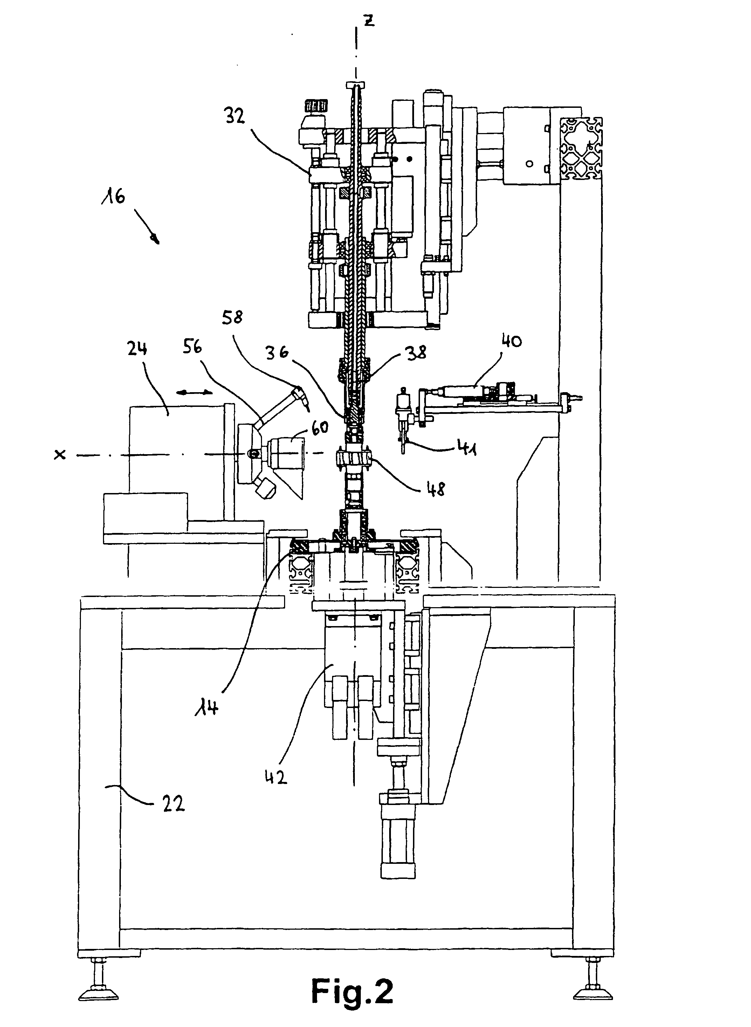

Die beiden in Fig. 2 detailliert dargestellten Wickelstationen 16, 18 sind auf einem gemeinsamen Maschinenrahmen 22 montiert und umfassen als Hauptkomponenten je einen Wickelsupport 24, 26, einen Drahtabroller 28, 30, eine Verstelleinheit 32, 34 für Abdeckhülsen 36 und Gegenlager 38, eine Drahtklemmereinheit 40 mit einem Drahtklemmer 41 sowie eine im Maschinenrahmen eingebaute Verschalteinheit 42.

Von einer Bedienperson 44 oder beispielsweise von einem Roboter werden die Paletten 14 mit den zu wickelnden Statoren beladen und mittels des Palettenfördersystems 12 der ersten Wickelstation 16 zugeführt, in welcher beispielsweise eine erste Wicklung mit einem Draht einer ersten Querschnittsdimension vorgenommen wird. Anschliessend wird die Palette mit dem aufgesetzten Stator zur zweiten Wickelstation 18 geführt, in welcher beispielsweise eine zweite Wicklung mit einem Draht einer zweiten Querschnittsdimension durchgeführt wird. Altemativ kann in der ersten Wickelstation 16 beispielsweise eine Hauptwicklung, in der zweiten Wickelstation 18 eine Nebenwicklung aufgebracht werden. Anschliessend erfolgt der Transport der Palette zur Terminalsetzstation 20, in welcher die später für elektrische Anschlüsse verwendeten Kontaktfahnen oder Terminals gesetzt werden. Der fertig gewickelte Stator wird anschliessend von der Bedienperson von der Palette entfernt und die Palette wird mit einem neuen Stator beladen. Im Bereich der Bedienperson 44 befindet sich ein Bedienungspult 46 zur Einstellung der automatischen Steuerung der Anlage 10.

Gemäss Fig. 2 ist ein Stator 48 auf der Palette 14 um die Verschaltachse z der Verschalteinheit 42 drehbar gelagert. Die Gegenlagerung erfolgt über das an der Verstelleinheit 32 angeordnete Gegenlager 38. Die Wicklung des Stators 48 erfolgt auf herkömmliche Weise mittels eines am Wickelsupport 24 festgelegten Wickelarmes 56 mit endständigem Drahtführer 58 sowie mit Wickelbacken 60. Beim Wickeln des Stators 48 wird der Wickelsupport 24 gegen den Stator 48 verschoben, bis die Wickelbacken 60 in Wickelposition sind. Anschliessend erfolgt die Wicklung eines Nutenpaares durch Rotation des Wikkelarmes 56 um eine senkrecht zur Verschaltachse z liegende Drehachse x. Aus Gründen der besseren Übersicht ist der Draht und dessen Zuführung nicht dargestellt.

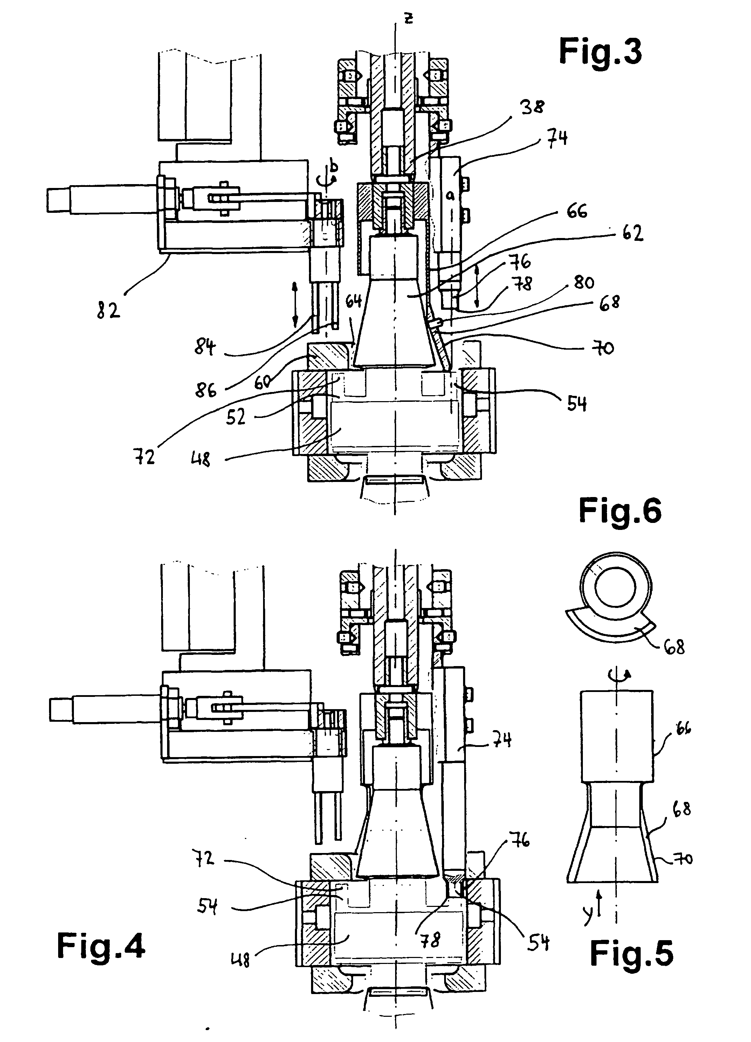

Fig. 3 zeigt den Stator 48 und die Wickelbacken 60 in Wickelstellung. Ein in der Verschaltachse z angeordneter Drahtführungskonus 62 bildet zusammen mit den Wickelbacken 60 einen Einführungsschlitz 64 zur Einführung des Wikkeldrahtes in die Axialnuten des Stators 48. Der Drahtführungskonus 62 ist von einer um die Verschaltachse z drehbar gelagerten Leit- und Abdeckhülse 66 übergriffen. Die Leit- und Abdeckhülse 66 ist konisch zu einem Leitsegment 68 erweitert. Die äussere Oberfläche des Leitsegments 68 bildet eine Leitfläche 70 als Führungshilfe zum Einlegen des Drahtes in den Schlitz 72 eines Anschlusselementes 54. In der Einlegestellung liegt das freie Ende der Leitfläche 70 dem Schlitz 72 eines Anschlusselementes 54 so gegenüber, dass ein der Leitfläche 70 entlang geführter Draht in den Schlitz 72 geführt wird. In der Einlegestellung liegt somit das freie Ende der Leitfläche 70 in Blickrichtung der Verschaltachse z dem Schlitz 72 tangential an.

Befindet sich der Draht im Schlitz 72, so wird die Leit- und Abdeckhülse 66 um beispielsweise 90° gedreht, so dass sich das Leitsegment 68 aus dem Bereich des Anschlusselementes 54 mit eingelegtem Draht entfernt. An der Verstelleinheit 32 ist eine Drahtsetzeinheit 74 mit einer in parallel zur Verschaltachse z in einer Achse a verschiebbaren Drahtsetzhülse 76 festgelegt. Die innere Querschnittsdimension der Drahtsetzhülse 76 ist hierbei auf den Querschnitt der Anschlusselemente 54 abgestimmt, so dass diese mit einem Spiel von der Drahtsetzhülse 76 übergreifbar sind. Nachdem der Draht in den Schlitz 72 des Anschlusselementes 54 eingesetzt und die Leit- und Abdeckhülse 66 mit dem Leitsegment 68 sich in der in Fig. 4 gezeigten Position befindet, wird die Drahtsetzhülse 76 - wie in Fig. 4 gezeigt - gegen das Anschlusselement 54 geführt, übergreift dieses und mit dem freien Hülsenrand 78 wird der Draht an den Schlitzgrund geführt. Gleichzeitig kann in dieser Stellung der von einem Drahtklemmer 41 der Drahtklemmereinheit gehaltene Draht am Hülsenrand 78 abgerissen werden.

Das vorstehend beschriebene Einlegen des Drahtes in ein Anschlusselement 54 erfolgt beispielsweise am Wickelanfang. Hierzu wird der Wickeldraht an seinem freien Ende mit dem Drahtklemmer 41 gehalten, während durch Drehung der Wickelarm 56 um die Drehachse x einige wenige Wicklungen zur Fixierung des Drahtes am Wickelanfang in ein Nutenpaar des Stators 48 eingelegt werden. Anschliessend erfolgt eine Verschaltung des Stators 48 um die Verschaltachse z so, dass der zwischen dem Drahtklemmer 41 und einer Nut des Stators gespannte Draht sich lockert und eine Schlaufe bildet. Gleichzeitig wird mit der Verschaltung die Drahtsetzhülse 76 mit einem Anschlusselement 54 der Achse a ausgerichtet. Durch eine entsprechende Bewegung des Drahtklemmers 41 wird der Draht entlang der Leitfläche 70 des Leitsegmentes 78 in den Schlitz 72 des bereitstehenden Anschlusselementes 54 geführt. Anschliessend erfolgt das Setzen des Drahtes wie oben beschrieben mittels der Drahtsetzhülse 76.

Wie aus Fig. 3 ersichtlich, ist das Leitsegment 68 mit einem von der Leitfläche 70 abragenden Stift 80 versehen. Dieser Stift 80 dient der Bildung einer geeigneten Drahtschlaufe zum Einlegen des Drahtes in den Schlitz 72 des Anschlusselementes 54. Hierzu wird der Draht am Wickelanfang mit dem Drahtklemmer oberhalb des Stiftes 80 geführt, so dass der Draht nicht vorzeitig über die Leitfläche 70 gleitet.

Die Ausbildung der Leit- und Abdeckhülse 66 ist in den Fig. 5 und 6 erkennbar. Der Umfang des konisch erweiterten Leitsegmentes 68 erstreckt sich über etwa einen Viertel des Hülsenumfanges.

Wie aus Fig. 3 weiter ersichtlich, ist im Bereich der Wickeleinheit eine Drahtumlenkeinheit 82 angeordnet. Diese besteht im wesentlichen aus zwei parallel zur Verschaltachse z in einer Achse b angeordneten Stäben 84, 86, die einerseits um die Achse b drehbar und andererseits in dieser Achse b verschiebbar sind. Die Drahtumlenkeinheit 82 dient dazu, einen Draht innerhalb einer Wicklung in den Schlitz 72 eines Anschlusselementes 54 einzulegen, wobei der eingelegte Draht anschliessend weitergewickelt wird.

Vor dem Einlegen des Drahtes in den Schlitz 72 eines Anschlusselementes 54 wird der zwischen dem Stator 48 und dem Wickelarm gespannte Draht von den von der Drahtumlenkeinheit 82 absenkbaren Stäben 84, 86 übergriffen, so dass der Draht zwischen den Stäben verläuft. Durch eine Drehbewegung der Stäbe 84, 86 um die Achse b wird der Draht parallel zum Schlitz 72 des Anschlusselementes 54 ausgerichtet. Sobald der Wickelarm sich zur Fortsetzung des Wickelvorganges dreht, gleitet der Draht der Oberfläche der Stäbe 84, 86 entlang in den Schlitz 72 des Anschlusselementes 54.

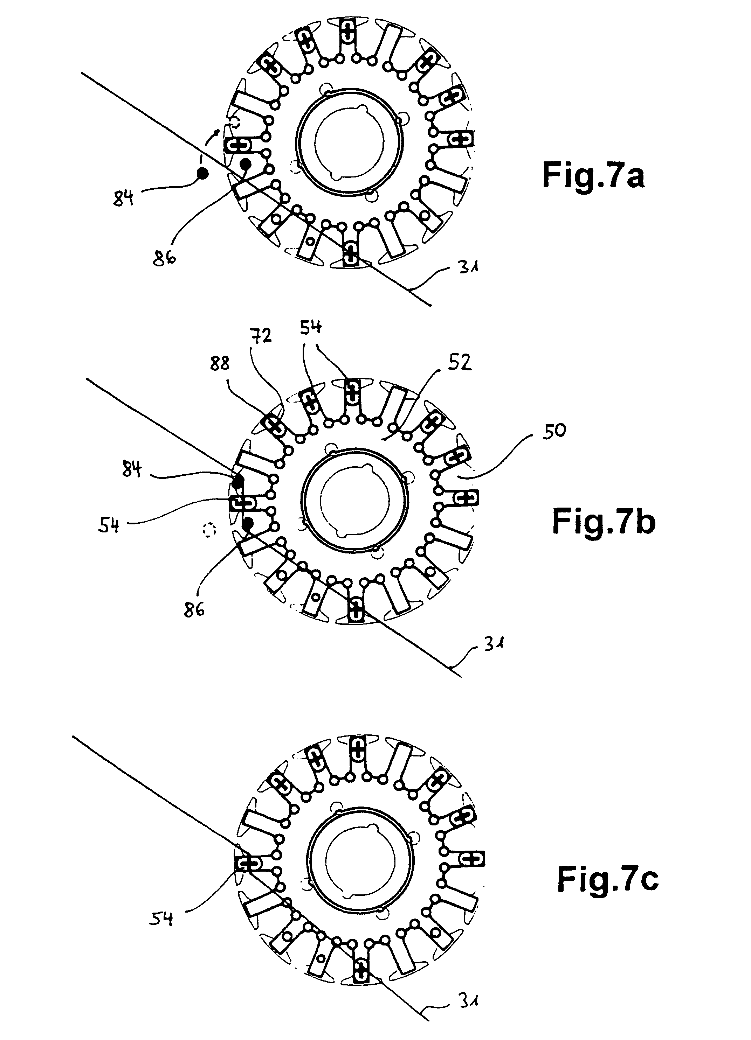

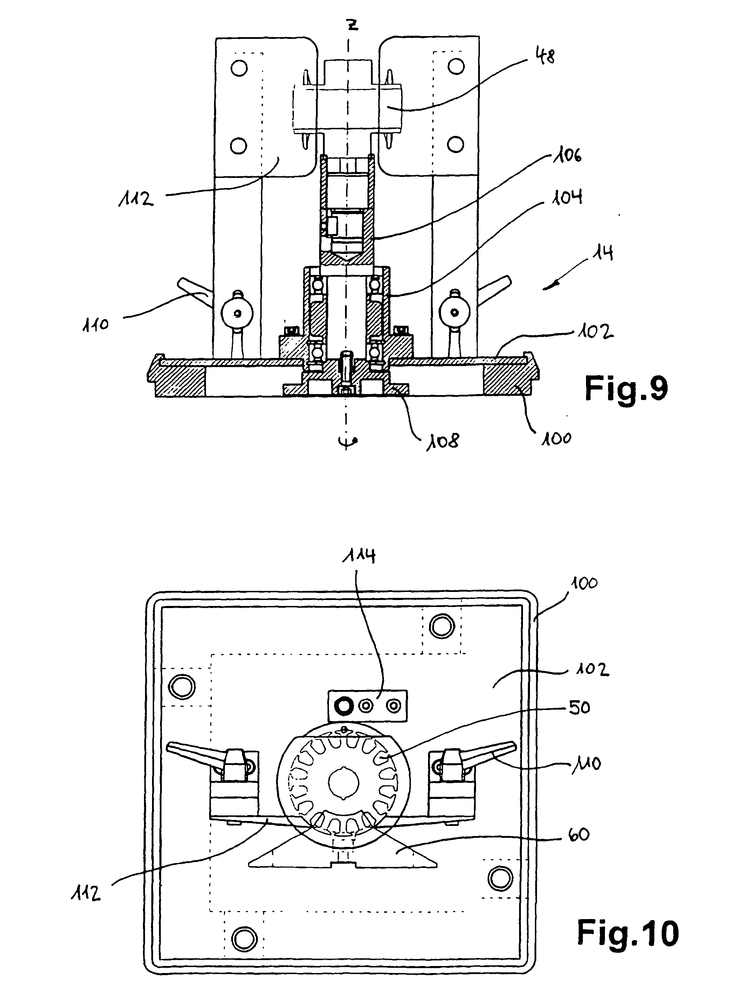

Der Drahtumlenk- und Einlegevorgang ist in den Fig. 7a bis c dargestellt. Aus diesen Figuren ist an den Anschlusselementen 54 ein zweiter Schlitz 88 erkennbar, der im wesentlichen senkrecht zum ersten Schlitz 72 verläuft. Dieser zweite Schlitz 88 dient der Aufnahme eines in Fig. 8 dargestellten Terminals oder einer Kontaktfahne 90 für die spätere elektrische Kontaktierung des Stators.

In Fig. 7a befinden sich die beiden Stäbe 84, 86 in abgesenkter Lage, d.h. der Draht 31 verläuft zwischen den Stäben. Die Achse b wird hier durch den Stab 56 gebildet, d.h. bei Drehung des Stabes 84 um die Achse b dreht sich der Stab 86 an Ort. In Fig. 7b befindet sich der Stab 84 in seiner gegenüber Fig. 7a um etwa 90° gedrehten Lage. Der gespannte, um die beiden Stäbe 84, 86 gelenkte Draht 31 liegt nun parallel zum Schlitz 72 oberhalb der Stirnfläche des Anschlusselementes 54. Wie oben erwähnt, gleitet der Draht bei Fortsetzung des Wickelvorganges in den Schlitz 72. Gleichzeitig werden die Stäbe 84, 86 in Richtung der Achse b nach oben verschoben und aus dem Wickelbereich entfernt. Fig. 7c zeigt den in den Schlitz 72 des Anschlusselementes 54 eingelegten Draht 31.

Die Verschiebebewegungen der Drahtsetzhülse 76 und der Stäbe 84, 86 der Drahtumlenkeinheit 82 in Richtung der Achsen a bzw. b erfolgt pneumatisch über Zylinder, jedoch sind auch andere Antriebsmittel möglich. Die Drehbewegung der Stäbe 84, 86 um die Achse b erfolgt im gezeigten Beispiel ebenfalls über einen pneumatisch betätigbaren Zylinder. Es sei an dieser Stelle noch erwähnt, dass die erfindungsgemäss eingesetzte Drahtsetzeinheit 74 und die Drahtumlenkeinheit 82 mit herkömmlichen Wickelmaschinen eingesetzt werden können.

Wie in Fig. 8 gezeigt, wird dem gewickelten Stator eine Printplatte 92 aufgesetzt, wobei die Anschlusselemente 54 diese durchdringen. Die in den Schlitz 88 des Anschlusselementes 54 eingesetzte Kontaktfahne 90 ist an dem in den Schlitz einzusetzenden Ende unter Freilassung eines Spaltes 94 in zwei Schenkelteile 96, 98 aufgeteilt. Beim Einsetzen der Kontaktfahne 90 in den Schlitz 88 wird der am Grund des Schlitzes 72 liegende Draht 31 vom Spalt 94 der Kontaktfahne 90 aufgenommen. Durch den über die innenseitig aufgerauhten Schenkelteile 96, 98 ausgeübten Druck wird die Isolation des Drahtes zerstört und ein elektrischer Kontakt hergestellt.

Eine mit dem Palettenfördersystem 12 verwendete Palette 14 weist gemäss den Fig. 9 und 10 einen Palettengrundrahmen 100 aus Kunststoff mit einer Einlageplatte 102 aus Stahl auf. Auf der Einlageplatte 102 ist ein Support 104 für einen darin drehbar gelagerten Aufnahmedom 106 für die Aufnahme eines Stators 48 montiert. Die Verbindung der Verschalteinheit 42 mit dem Aufnahmedorn 106 erfolgt über einen Mitnahmeflansch 108 durch die Einlageplatte 102 hindurch. Auf der Einlageplatte 102 des Palettengrundrahmens 100 sind über Schnelllösemittel 110 schnell wechselbare Drahtführungsplatten oder Stegabdeckungen 112 montiert. Eine Arretierung 114 gewährleistet definierte Verschaltpositionen.

## Patentansprüche

1. Vorrichtung zum Wickeln von Draht zu Spulen in am Aussenumfang rotationssymmetrischer Körper (48) von elektrischen Geräten angeordnete Axialnuten (50) und ein Einlegen des Drahtes (31) in Schlitze (72) von auf einer Endplatte (52) des Körpers auf einem Kreis angeordneten und in axialer Richtung von der Endplatte abragenden Anschlusselementen (54), wobei die Schlitze parallel zur Rotationsachse des Körpers stirnseitig in das Anschlusselement verlaufen, mit einem den Draht (31) führenden Wickelarm (56) und einer Verschalteinheit mit Verschaltachse (z),
**gekennzeichnet, durch**
eine um die Verschaltachse (z) drehbar gelagerte Leit- und Abdeckhülse (66) mit einem konisch erweiterten, eine Leitfläche (70) bildenden Leitsegment (68) als Führungshilfe zum Einlegen des Drahtes in den Schlitz (72) eines Anschlusselementes (54) und eine parallel zur Verschaltachse (z) in einer Achse (a) verschiebbare, ein Anschlusselement übergreifbare Drahtsetzhülse (76) zum Setzen des Drahtes (31) am Schlitzgrund.

2. Vorrichtung nach Anspruch 1, weiter **gekennzeichnet durch** ein in einer Achse (b) verschiebbares und um diese Achse (b) drehbar gelagertes Drahtumlenkmittel zur parallelen Ausrichtung des in den Schlitz (72) eines Anschlusselementes (54) einzulegenden Drahtes (31) mit dem Schlitz.

3. Vorrichtung nach Anspruch 2, **dadurch gekennzeichnet, dass** das Drahtumlenkmittel zwei in Abstand parallel zu einander angeordnete Stäbe (84,86) umfasst.

4. Vorrichtung nach einem der Ansprüche 1 bis 3, **dadurch gekennzeichnet, dass** von der Leitfläche (70) des Leitsegments (68) ein Stift (80) zur Bildung einer Drahtschlaufe vor dem Einlegen des Drahtes (31) in den Schlitz (72) eines Anschlusselementes (54) abragt.

## Claims

1. Device for winding wire into coils in axial grooves (50) which are arranged on the outer periphery of rotationally symmetrical bodies (48) of electrical devices and laying of the wire (31) in slots (72) of connecting elements (54) arranged in a circle on an end plate (52) of the body and protruding from the end plate in the axial direction, where the slots run on the face into the connecting element parallel to the rotation axis of the body, with a winding arm (56) guiding the wire (31) and a switching unit with switching axis (z),
**characterised by**
a guide and cover sleeve (66) mounted rotatably about the switching axis (z) with a conically expanded guide segment (68) forming a guide surface (70) as a guidance aid (68) for laying the wire in the slot (72) of a connecting element (54), and a wire positioning sleeve (76) displaceable in an axis (a) parallel to the switching axis (z) and extending beyond the connecting element, for positioning the wire (31) on the slot base.

2. Device according to claim 1, further **characterised by** a wire deflection means which is displaceable in an axis (b) and mounted rotatably about this axis (b) for parallel alignment of the wire (31) to be laid in the slot (72) of a connecting element (54) with the slot.

3. Device according to claim 2, **characterised in that** the wire deflection means comprises two rods (84, 86) which are arranged spaced apart and parallel to each other.

4. Device according to any of claims 1 to 3, **characterised in that** from the guide surface (70) of the guide segment (68) protrudes a pin (80) to form a wire loop before laying of the wire (31) in the slot (72) of a connecting element (54).

## Revendications

1. Dispositif d'enroulement d'un fil en bobines dans des rainures axiales (50) ménagées dans la périphérie externe de corps (48) à symétrie de rotation de dispositifs électriques, et d'insertion du fil (31) dans des fentes (72) ménagées dans des éléments connecteurs (54) disposés sur un cercle sur une plaque d'extrémité (52) du corps et faisant saillie en direction axiale à partir de la plaque d'extrémité, dans lequel le tracé des fentes ménagées sur la face frontale dans l'élément connecteur est parallèle à l'axe de rotation du corps, le dispositif comprenant un bras enrouleur (56) de guidage du fil (31) une unité de câblage à axe de câblage (z) **caractérisé en ce qu'**il comprend
une douille de guidage et de recouvrement (66) logée à rotation autour de l'axe de câblage (z) et comportant un segment de guidage (68) élargi coniquement formant une surface de guidage (70) qui sert d'assistance de guidage pour insérer le fil dans la fente (72) d'un élément connecteur (54), ainsi qu'une douille de pose (76) de fil qui peut coulisser le long d'un axe (a) parallèlement à l'axe de câblage (z) et chevaucher un élément connecteur afin de poser le fil (31) dans le fond de la fente.

2. Dispositif selon la revendication 1, **caractérisé en outre par** un moyen de changement de direction du fil, susceptible de coulisser le long d'un axe (b) et logé à rotation autour de cet axe (b) afin d'orienter parallèlement à la fente (72) d'un élément connecteur (54) le fil (31) à insérer dans cette fente.

3. Dispositif selon la revendication 2, **caractérisé en ce que** le moyen de changement de direction de fil comprend deux barreaux (84, 86) parallèles entre eux agencés à distance l'un de l'autre.

4. Dispositif selon l'une des revendications précédentes, **caractérisé en ce qu'**une tige (80) de formation d'une boucle de fil avant l'insertion du fil (31) dans la fente (72) d'un élément connecteur (54) fait saillie de la surface de guidage (70) du segment de guidage (68).
